# EUROPEAN PATENT APPLICATION

(11) **EP 1 630 808 A2**
(43) Date of publication of application: **01.03.2006**
(21) Application number: 05255277.5
(22) Date of filing: 26.08.2005
(51) Int. Cl.: G11B 19/02, G11B 27/00

(54) **Title-by-title locking of files in a reproducing and/or recording apparatus**

(30) Priority: 30.08.2004 JP 2004251056
(71) Applicant: ORION ELECTRIC CO., Ltd., Takefu-shi, Fukui 915-8555 (JP)
(72) Inventor: Hayashi, Hirotaka Intellectual Property Department, Takefu-city Fukui 915-8555 (JP)
(74) Representative: Paget, Hugh Charles Edward

(57) **Abstract**

To provide a player or recorder/player which records content on a recording medium by a recording method compliant with the DVD-VR format, or electronic apparatus equipped therewith, where the recorder/player or the like is capable of setting parental locks on individual titles in the content. Title-by-title parental lockout works as follows. When there is a playback request or the like for a title in content recorded in the DVD-VR format, it is checked whether a password has been set in an IT_TXT field existing in a TXTDT_MG table and corresponding to the requested title (Step 401 to 405). If a password has been set, the user is prompted to enter a password (Steps 407 to 411). If the entered password is incorrect, the user is not permitted to handle the title (Step 412).

## Description

### BACKGROUND OF THE INVENTION

### Field of the Invention

The present invention relates to a player or recorder/player which uses a recording method compliant with the DVD Video Recording format. More particularly, it relates to a player or recorder/player which allows parental lockout on a title-by-title basis.

### Description of the related art

Recently, the DVD (Digital Versatile Disc) has been spreading rapidly. A combination of three layers of formats is used to record information on a DVD. For formatting in an application layer, the uppermost of the three layers, there are three standards: DVD-Video format (hereinafter referred to simply as the Video format), DVD Video Recording format (hereinafter referred to simply as the DVD-VR format), and DVD+RW Video Recording format (hereinafter referred to simply as the DVD+VR format).

A DVD, which can store various digitized information and can be accessed randomly, can provide various functions in playing back content recorded on it and manage various information. Conventional techniques concerning such content playback and editing, information management, etc. and related to formatting in the application layer have been disclosed, for example, in the Japanese Patent Laid-Open Publication No. 2001-268510, Japanese Patent Laid-Open Publication No. 2003-178536, Japanese Patent Laid-Open Publication No. 2003-132624, Japanese Patent Laid-Open Publication No. 2004-30799 (Patent Documents 1 through 4).

With the Video format, although it is possible to set parental information on a title-by-title basis and set parental locks on a title-by-title basis using this information, it is not possible to amend or divide titles because this standard is not intended to edit content, etc. On the other hand, the DVD-VR and DVD+VR formats support amendment, rewriting, partial deletion, and editing, etc. of content. Of these formats, the DVD-VR format, which is a standard developed by the DVD Forum, allows recorded data to be divided at any position, making it possible edit recorded content in various ways. However, the DVD-VR format itself does not have a capability for title-by-title parental lockout.

### SUMMARY OF THE INVENTION

In view of the above circumstances, the present invention has an object to provide a player or recorder/player which records content on a recording medium by a recording method compliant with the DVD Video Recording format, or electronic apparatus equipped therewith, where the player or recorder/player is capable of setting parental locks on individual titles in the content. In this description and claims, the term "parental lockout" is used generically to cover lockout by any user, and is not restricted to lockout by parents.

As set forth in claim 1, there is provided a recorder or recorder/player capable of title-by-title parental lockout, or electronic apparatus equipped therewith, where the recorder or recorder/player records content on a recording medium by a recording method compliant with the DVD Video Recording format, characterized in that when there is a request to set or change a password for a new title created as a result of video-recording or editing of content or for an existing title, a user is prompted for a password to be associated with the title and a table for the password is constructed in a VR_MANGR.IFO file in the DVD Video Recording format to allow the password to be associated with the title.

With the above configuration, since passwords are set on a title-by-title basis and the resulting information is stored in the VR_MANGR.IFO file, it is possible to set title-by-title parental locks on playback of content recorded on a recording medium by the given recording method.

As set forth in claim 2, the recorder or recorder/player capable of title-by-title parental lockout, or electronic apparatus equipped therewith according to claim 1 is characterized in that the password is stored in an IT_TXT field of a TXTDT_MG table in the VR_MANGR. IFO file, making it possible to associate the password with the title.

In the DVD-VR format, TXTDT_MG allows additional information (e.g., a title's genre or input source) to be recorded for each title. According to the standard, it is optional to use TXTDT_MG (it is perfectly all right in operation if TXTDT_MG is not used, in which case, the TXTDT_MG table itself is not created). Thus, it is not against the standard of the DVD-VR format to store passwords in the TXTDT_MG table. Besides, since TXTDT_MG can record information associated with each title, by storing passwords in the TXTDT_MG table, it is possible to associate the passwords with titles.

As set forth in claim 3, the recorder or recorder/player capable of title-by-title parental lockout, or electronic apparatus equipped therewith according to claim 2 is characterized in that pointer information which points to an address of the IT_TXT in an IT_TXT_SRP field of the TXTDT_MG table is disabled.

With the above configuration, since the pointer information which points to the IT_TXT field address in the IT_TXT_SRP field is disabled, IT_TXT field information cannot be accessed using the pointer information which points to the IT_TXT field address in the IT_TXT_SRP field.

As set forth in claim 4, there is provided a recording medium capable of title-by-title parental lockout, where content has been recorded on the recording medium by a recording method compliant with the DVD Video Recording format, characterized in that passwords associated with respective titles in the content are stored in IT_TXT fields of a TXTDT_MG table in a VR_MANGR.IFO file.

As set forth in claim 5, there is provided a player or recorder/player capable of title-by-title parental lockout, or electronic apparatus equipped therewith, where the player or recorder/player plays back content recorded on a recording medium by a recording method compliant with the DVD Video Recording format, characterized in that when a user makes a playback, edit, or other request for a title recorded on the recording medium on which passwords associated with respective titles in the content are stored in IT_TXT fields of a TXTDT_MG table in a VR_MANGR.IFO file, a playback, edit, or other operation of the title is permitted or refused by prompting the user to enter a password and comparing the entered password with the password associated with the requested title recorded on the recording medium.

With the above configuration, when a user makes a playback, edit, or other request for a title recorded on the recording medium on which passwords associated with respective titles are stored in the IT_TXT fields, it is possible to prompt for a password and permit or refuse a playback, edit, or other operation of the title based on the validity of the entered password.

As set forth in claim 6, there is provided a title-by-title password setting method for setting passwords for respective titles of content recorded on a recording medium by a recording method compliant with the DVD Video Recording format, characterized by comprising a step of storing the passwords in IT_TXT fields of a TXTDT_MG table in a VR_MANGR.IFO file, thereby allowing passwords to be set for the respective titles.

As set forth in claim 7, there is provided a title-by-title access permission method provided for a playback, edit, or other request for a title of content recorded on a recording medium by a recording method compliant with the DVD Video Recording format, characterized by comprising the steps of: treating information in an IT_TXT field corresponding to the requested title and existing in a TXTDT_MG table in a VR_MANGR.IFO file as a password; prompting for the password if there is an access request to the title; and accepting or rejecting the access request based on the entered password.

As set forth in claim 8, there is provided a title-by-title password setting program running on a microcomputer incorporated in a recorder, recorder/player, or an electronic apparatus equipped therewith, where the recorder or recorder/player records content on a recording medium by a recording method compliant with the DVD Video Recording format, characterized in that when there is a request to set or change a new password for a new title created as a result of recording or editing of content or for an existing title, the title-by-title password setting program makes the microcomputer execute the steps of: searching for a TXTDT_MG table and creating a TXTDT_MG table if no such table exists; searching an IT_TXT field of the TXTDT_MG table for an existing password associated with the title; and prompting for a password corresponding to the existing password if the existing password is found, prompting for a new password if the existing password is entered correctly, and storing the new password in the IT_TXT field of the TXTDT_MG table by associating the new password with the title; or prompting for a new password if no existing password is found and storing the new password in an IT_TXT field of the TXTDT_MG table by associating the new password with the title.

As set forth in claim 9, there is provided a title-by-title access permission program running on a microcomputer incorporated in a player, recorder/player, or electronic apparatus equipped therewith, where the player or recorder/player plays back content recorded on a recording medium by a recording method compliant with the DVD Video Recording format, characterized in that when a user makes a playback, edit, or other request for a title recorded on the recording medium in compliance with the DVD Video Recording format, the title-by-title access permission program makes the microcomputer execute the steps of: searching for a TXTDT_MG table; searching an IT_TXT field of the TXTDT_MG table for a password associated with the title; prompting the user to enter a password corresponding to the password associated with the title if the password associated with the title is found; comparing the entered password with the password associated with the title; and accepting or rejecting the playback, edit, or other request for the title based on a result of the comparison.

### BRIEF DESCRIPTION OF THE DRAWINGS

FIG. 1 is a block diagram outlining only that part of an LCD with a built-in DVD recorder/player which is relevant to the present invention.
FIG. 2 is a perspective view of the LCD with a built-in DVD recorder/player.
FIG. 3 is a flowchart outlining operation of a password setting process.
FIG. 4 is a flowchart outlining operation of a password setting process.
FIG. 5 is a flowchart outlining operation of a password-based user authentication process.
FIG. 6 is a diagram showing a file structure in the DVD-VR format.
FIG. 7 is a diagram showing a structure of IT_TXT.
FIG. 8 is a diagram showing an example of a display screen on an LCD with a built-in DVD recorder/player.
FIG. 9 is a diagram showing an example of a display screen on an LCD with a built-in DVD recorder/player.
FIG. 10 is a diagram showing an example of a display screen on an LCD with a built-in DVD recorder/player.
FIG. 11 is a diagram showing an example of a display screen on an LCD with a built-in DVD recorder/player.

### DETAILED DESCRIPTION OF THE PREFERRED EMBODIMENTS

A concrete example of the present invention will be described with reference to the drawings. Incidentally the embodiment described below is only a form in which the present invention is embodied and is not intended to confine the present invention thereto.

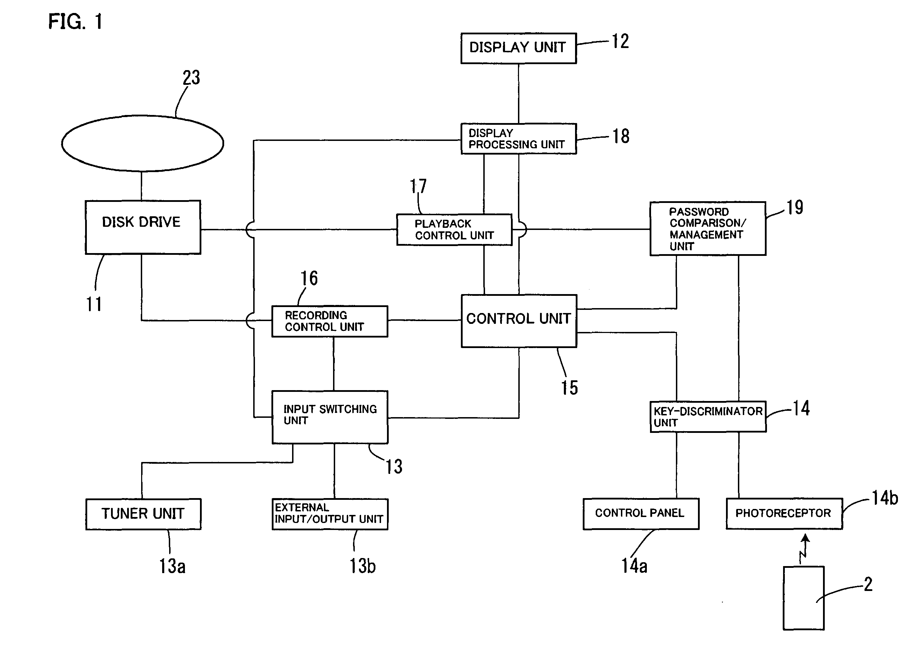

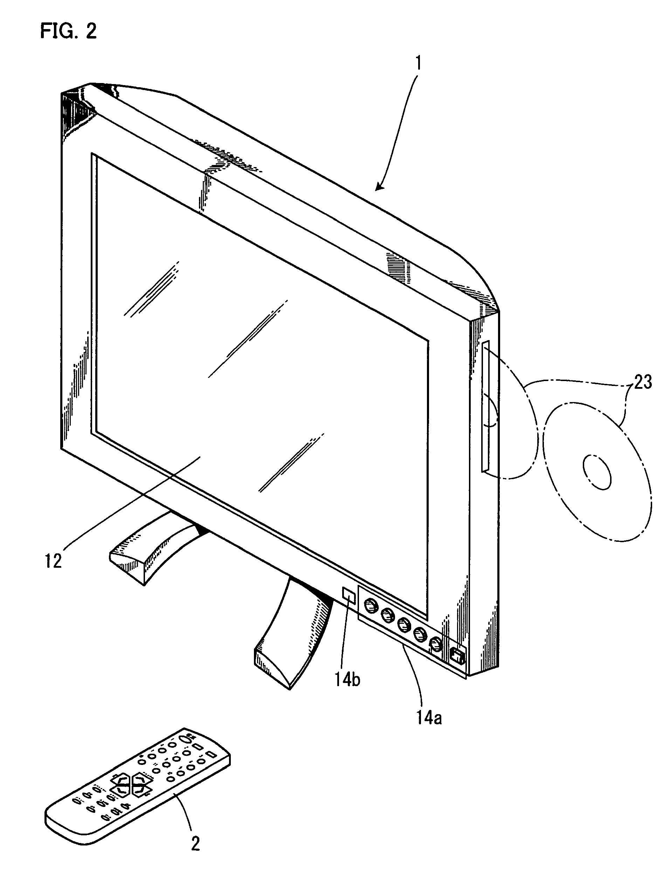

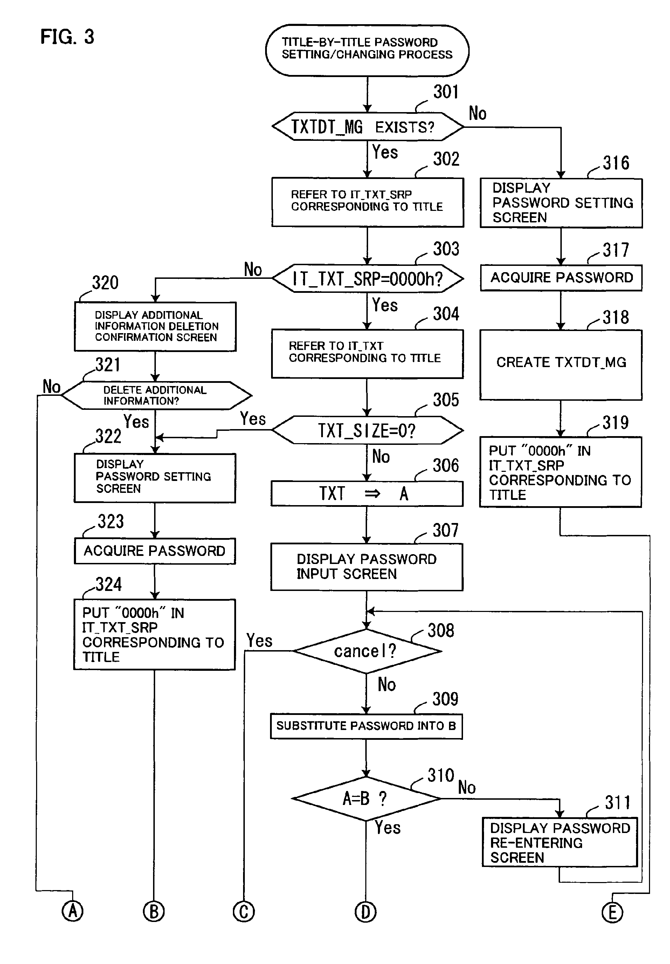

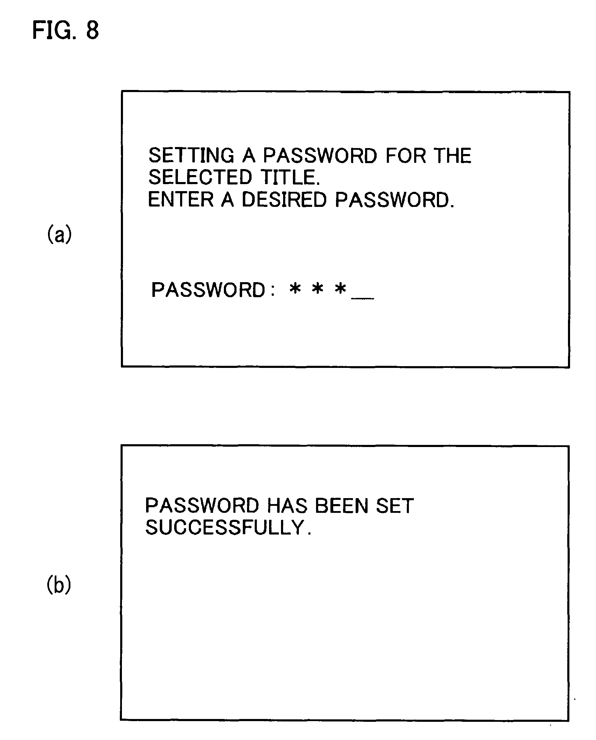

FIG. 1 is a block diagram outlining only that part of an LCD with a built-in DVD recorder/player which is relevant to the present invention. FIG. 2 is a perspective view of the LCD with a built-in DVD recorder/player. FIGS. 3 to 5 are flowcharts outlining that part of operation which is relevant to the present invention. FIGS. 8 to 11 are diagrams showing examples of a display screen brought up during operation of the LCD with a built-in DVD recorder/player.

As shown in FIG. 1, an LCD with a built-in DVD recorder/player (hereinafter referred to simply as a DVD-equipped LCD) 1 according to this example has a disk drive 11 which reads or writes signals to/from a DVD 23 which is an optical disk medium, a display unit 12, an input switching unit 13 which outputs signals from a tuner unit 13a and external input/output unit 13b by switching between them, a key-discriminator unit 14 which discriminates and outputs signals from a control panel 14a and a photoreceptor 14b, a control unit 15 which controls the entire equipment, etc. Furthermore, the DVD-equipped LCD 1 has a recording control unit 16 equipped with an encoder which converts video/audio signals received from the input switching unit 13 into MPEG-compliant signals and with a capability to generate recording data compliant with the standard of the DVD-VR format; a playback control unit 17 equipped with a decoder which decompresses data inputted through the disk drive 11; a display processing unit 18 which displays a video signal received from the input switching unit 13, playback control unit 17, or the like on the display unit 12; a password comparison/management unit 19 which stores/compares a password received from the control panel 14a or a remote control 2 via the key-discriminator unit 14 with a password retrieved from the DVD 23 via the disk drive 11 and playback control unit 17; etc.

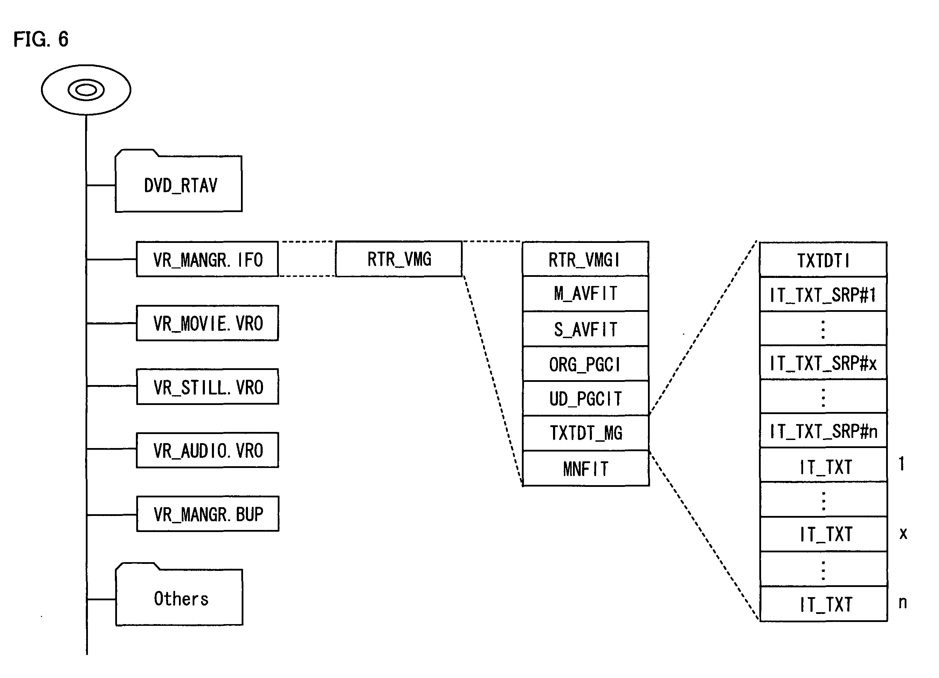

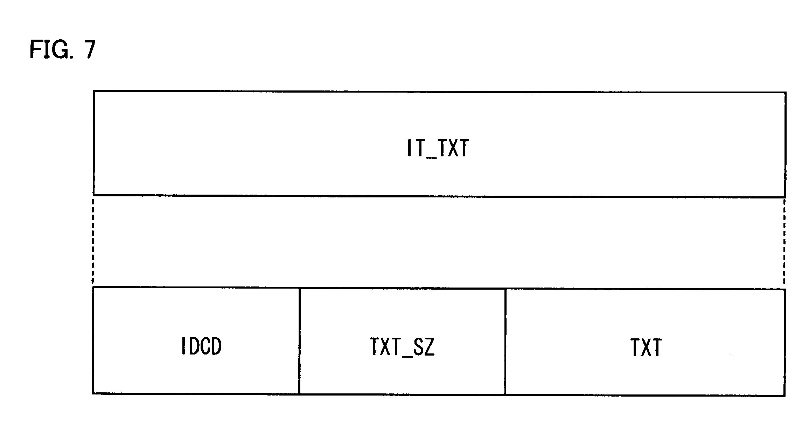

FIG. 6 is a diagram showing a file structure in the DVD-VR format, mainly a structure of a management information file (VR_MANGR.IFO file) in the DVD-VR format. FIG. 7 is a diagram showing a structure of IT_TXT. In the DVD-VR format, a TXTDT_MG table in the VR_MANGR.IFO file allows additional information to be recorded (e.g., the title's genre or input source) for each title (e.g., one movie). According to the standard, it is optional to use TXTDT_MG and it is perfectly all right if TXTDT_MG is not used, in which case, the TXTDT_MG table itself is not created. The presence or absence of TXTDT_MG (presence or absence of data) is determined based on the starting address of the TXTDT_MG managed in RTR_VMGI (if there is no TXTDT_MG data, "0" is assigned as the starting address of the TXTDT_MG) . The TXTDT_MG table is composed of TXTDTI, IT_TXT_SRP#1 to IT_TXT_SRP#n, and IT_TXT (n items) as shown in FIG. 6 (where n corresponds to the number of titles) . The TXTDTI describes specification of a character code set, the number n of IT_TXT_SRP's, etc. The IT_TXT is composed of IDCD, TXT_SZ, and TXT as shown in FIG. 7, where if the TXTDT_MG table is used as additional information about individual titles, the IDCD describes a code which represents the title' s genre and the like, the TXT describes information (text information) to be added to the title, and the TXT_SZ describes the size of the TXT (character count information). The IT_TXT_SRP's are search pointers to the respective IT_TXT's. Thus, if a DVD contains three titles each of which has additional information, three IT_TXT's are created for the respective titles. Also, three IT_TXT_SRP (IT_TXT_SRP#1 to IT_TXT_SRP#3) search pointers are created to pair up with the respective IT_TXT's . Incidentally, the file structure of the DVD-VR format has been specified by the standard, and thus description thereof will be omitted except for those parts which are relevant to the present invention.

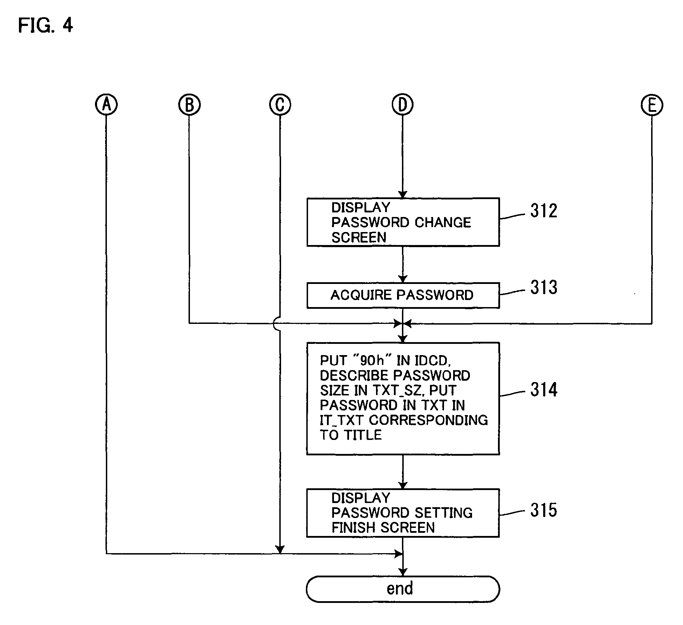

The process of setting passwords for individual titles (construction of a password table in the VR_MANGR.IFO file in the DVD-VR format) will be described with reference to FIGS. 3 and 4. Password setting for titles include setting passwords for new titles created by video-recording or editing (division of a title) and setting new passwords or changing existing passwords for existing titles. Thus, passwords are set in a "title-by-title password setting/changing process" (FIGS. 3 and 4) invoked by individual processes (e.g., a management information creating process which operates when a video program--video/audio signals received from the tuner unit 13a via the input switching unit 13--is recorded on a DVD 23).

When started, the title-by-title password setting/changing process (FIGS. 3 and 4) checks for a TXTDT_MG table (Step 301). If there is a TXTDT_MG table, the process goes to Step 302. If there is no TXTDT_MG table, the process goes to Step 316. The presence or absence of the TXTDT_MG table is determined based on the corresponding starting address in the RTR_VMGI table (there is no TXTDT_MG if the starting address of TXTDT_MG is "0"). The determination is made by the control unit 15 by checking signals obtained by the disk drive 11 and playback control unit 17 from the DVD 23 (the same is true to the other determinations made below by acquiring information from the DVD 23). If there is no TXTDT_MG table, the process displays a password setting screen such as the one shown in FIG. 8(a) (Step 316), acquires a password (Step 317), creates a TXTDT_MG table (Step 318), and puts "0000h" (Search Pointer Disabled) in the IT_TXT_SRP corresponding to the title (Step 319). Then, the process puts "90h" in the IDCD in the IT_TXT corresponding to the title, puts the password acquired in Step 317 in the TXT, describes the size (password length in terms of digits) of the TXT in the TXT_SZ (0 is put in the TXT_SZ if the user presses Enter without entering any password) (Step 314), displays a password setting finish screen such as the one shown in FIG. 8(b) (Step 315), and thereby finishes processing. Incidentally, the password is acquired by the key-discriminator unit 14, control unit 15, and password comparison/management unit 19 as the user operates the remote control 2 or control panel 14a by following instructions on the display screen. The same is true to the other cases of password acquisition described below. Incidentally, "90h" is put in the IDCD in the IT_TXT corresponding to the title (Step 314) according to this example, and "90h" is a code which indicates "Others" according to the DVD-VR standard. This is done to give precedence to a description according to the standard, and it is not strictly necessary to use "90h" in the present invention.

The title in the phrase "corresponding to the title" is a title (current working title) identified by the other process which has invoked the "title-by-title password setting/changing process." For example, when setting a new password for title 3 created by dividing title 2, one of two titles--title 1 and title 2--contained in a DVD, "title 3" is identified in an editing and dividing process and the phrase "corresponding to the title" indicates the IT_TXT or IT_TXT_SRP#3 corresponding to title 3 (incidentally, the IT_TXT and IT_TXT_SRP#3 corresponding to title 3 are created automatically during the dividing operation). Regarding concrete methods for determining the addresses (logical addresses) of "the IT_TXT and IT_TXT_SRP corresponding to the title" (see FIGS. 6 and 7), in the case of IT_TXT_SRP, the ending address (UD_PGCIT_EA) of UD_PGCIT has been recorded in UD_PGCIT (the starting address of TXTDT_MG is given by UD_PGCIT_EA + 1) and the TXTDTI (8 bytes) and IT_TXT_SRP (4 bytes) have fixed sizes, and thus the address of the x-th IT_TXT_SRP#x is given by {the starting address of TXTDT_MG + 8 + 4 (x - 1)}. In the case of IT_TXT, since the starting address of the first IT_TXT can be determined in the same manner as described above (the starting address of TXTDT_MG + 8 + 4n) and the size of the IT_TXT is given by {IDCD size + TXT_SZ size + TXT size}, i.e., {I byte + 1 byte + TXT size}, if, for example, the TXT size (password length) is fixed at 4, the address of the x-th IT_TXT is given by (the starting address of IT_TXT + 6 (x - 1)}. Even if the IT_TXT size is variable (the password length is arbitrary), the address of the TXT_SZ in the first IT_TXT is given by {the starting address of the first IT_TXT + 1} and the size of the first IT_TXT can be calculated from the TXT_SZ, making it possible to determine the starting address of the second IT_TXT, and thus the address of the x-th IT_TXT can be determined through the repetition of similar procedures. In this way, even if IT_TXT_SRP, the search pointer to IT_TXT, is disabled (0000h), the address of the IT_TXT corresponding to the title can be determined, making it possible to process "the IT_TXT corresponding to the title." This similarly applies to the phrase "corresponding to the title" in the following description of operation.

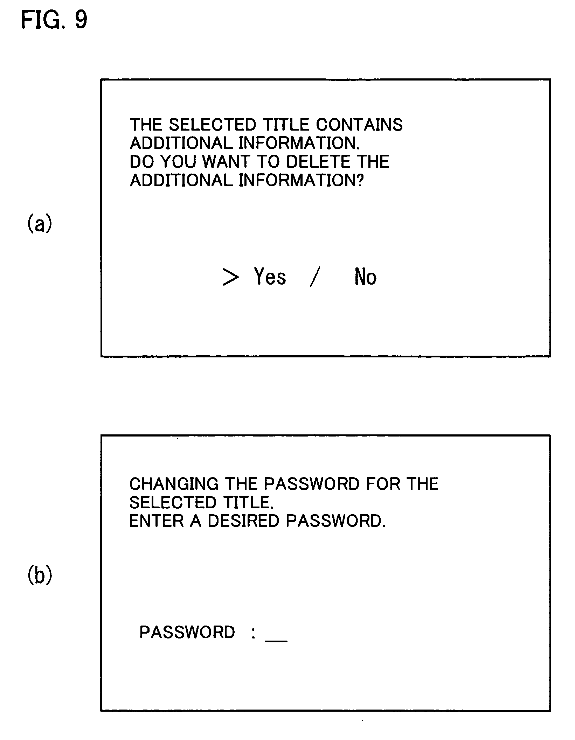

If the determination in Step 301 (FIG. 3) is affirmative (i.e., TXTDT_MG exists), the process refers to the IT_TXT_SRP corresponding to the title (Step 302) and thereby determines whether the search pointer is disabled (IT_TXT_SRP = 0000h) (Step 303) . If the search pointer is enabled, this means that TXTDT_MG is used and that additional information (e.g., a pictographic character) about the title is used (the IT_TXT field is already in use and it is not possible to set a password in this field). Therefore, in Step 320, the process displays a screen (FIG. 9(a)), asking the user whether it is all right to delete (overwrite) the additional information, and if the user answers "No," the process finishes processing (Step 321). If the user gives an affirmative answer in Step 321, the process displays a password setting screen (FIG. 8(a)) (Step 322) and acquires a password (Step 323). In Step 324, the process sets (overwrites) the IT_TXT_SRP corresponding to the title at (with) "0000h" and finishes processing after going through Steps 314 and 315 (which are similar to the Steps 314 and 315 above).

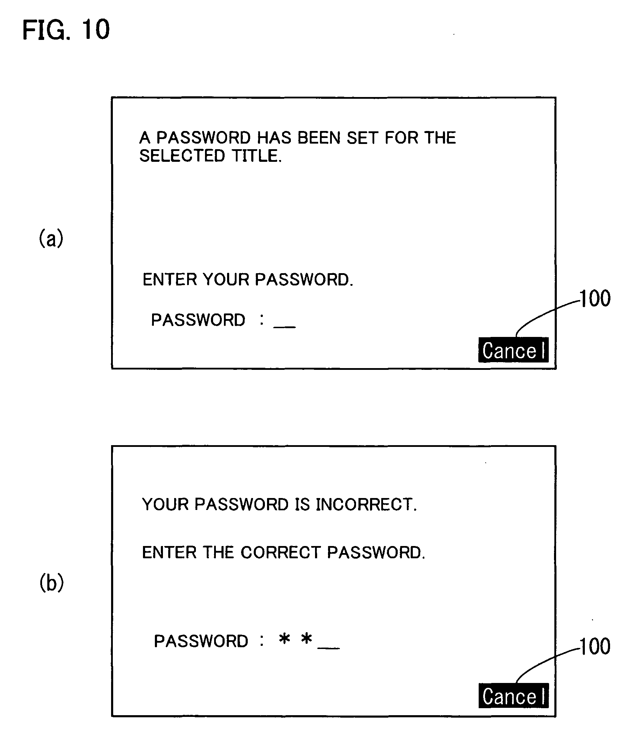

If the determination in Step 303 is affirmative (the search pointer is disabled), the process refers to the IT_TXT corresponding to the title (Step 304). If the TXT_SZ in the IT_TXT contains 0 (meaning that there is no password), the process goes to Step 322 (Step 305), and acquires and sets a password in the same manner as described above. On the other hand, if the determination in Step 305 is negative, the process substitutes the content (password) of the TXT into a variable A (holds it in the password comparison/management unit 19) in Step 306, displays a password input screen such as the one shown in FIG. 10 (a) (Step 307), substitutes an entered password into a variable B (Step 309), and makes the password comparison/management unit 19 compare A and B (Step 310) . If the passwords match, the process acquires the new password on a password change screen such as the one shown in FIG. 9 (b) (Steps 312 and 313), and finishes processing after going through Steps 314 and 315 (the same as described above). If the determination in Step 310 is negative (the password is incorrect), the process displays a password re-entering screen such as the one shown in FIG. 10(b) (Step 311) and goes to Step 308. In Step 308, if a Cancel button 100 shown in FIG. 10(a) or 10(b) is pressed (such as when the user is not a regular user and does not know his/her password), the process finishes processing. In these procedures (Steps 305 and 313), if the determination in Step 305 is negative, meaning that the IT_TXT_SRP is disabled and that the TXT in the IT_TXT contains information, it can be determined that a password according to the present invention has already been set (because when the information in the TXT is additional information about the title, it always follows that the IT_TXT_SRP is enabled), the process assumes that this is a password change for a title for which a password has already been set and thus prompts the user to enter the current password and permits the user to set a new password only if the user enters the correct password.

In this way, passwords corresponding to titles are set (created newly or changed) and stored in the IT_TXT fields of the TXTDT_MG table in the VR_MANGR. IFO file in the DVD-VR format (being associated with the respective titles and distinguished from the additional information about the titles so that they can be identified as passwords).

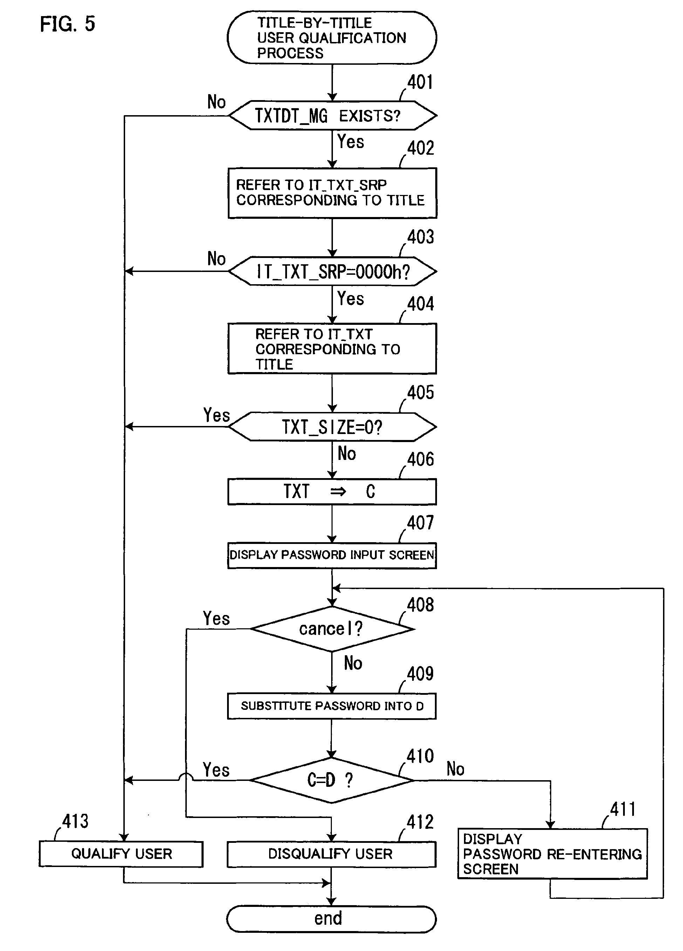

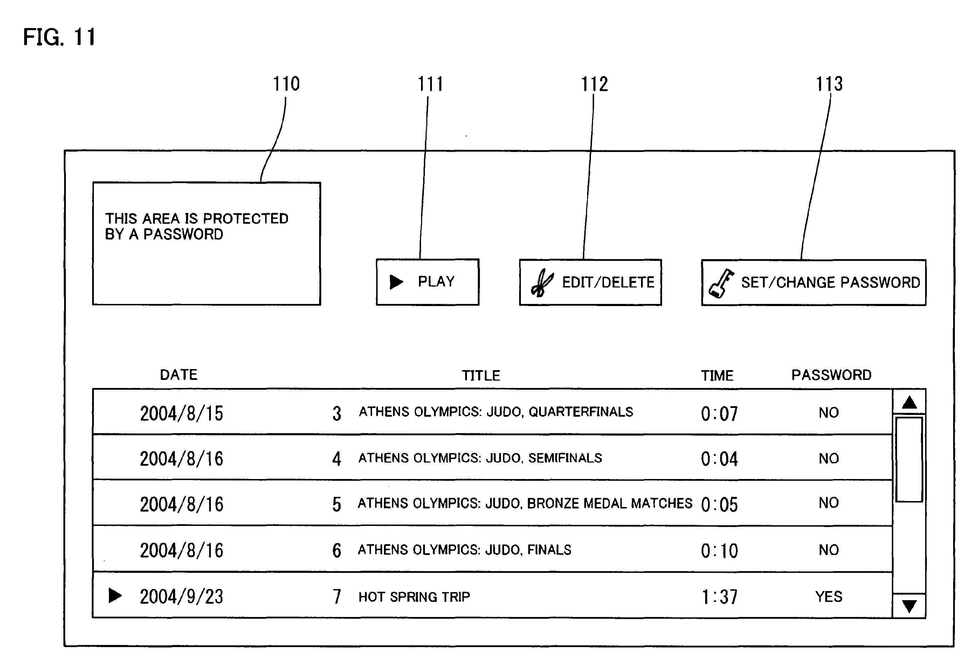

Next, the process of reading and verifying passwords corresponding to titles will be described with reference to FIG. 5. Passwords corresponding to titles are read and verified by a "title-by-title user qualification process" invoked by individual operations or processes to playback or edit/delete titles. Specifically, for example, with a list of the titles in a DVD 23 displayed as shown in FIG. 11, when the user selects a descried title (in FIG. 11, the title "Hot Spring Trip" for which a password has been set is selected and a thumbnail display section 110 displays a message stating that a password has been set and displays no thumbnail) and presses a Play button 111 or Edit/Delete button 112, the "title-by-title user qualification process" (FIG. 5) is started to determine whether the user is qualified for the given operation (playback or edit). Incidentally, pressing a Set/Change Password 113 button in FIG. 11 invokes a "title-by-title password setting/changing process" (FIGS. 3 and 4) for the selected title.

When started, the title-by-title user qualification process checks for a TXTDT_MG table (Step 401). If there is a TXTDT_MG table, the process goes to Step 402. If there is no TXTDT_MG table, the process goes to Step 413. Here, the presence or absence of the TXTDT_MG table is determined in a manner similar to Step 301 in FIG. 3. If the determination in Step 401 is affirmative, the process refers to the IT_TXT_SRP corresponding to the title in Step 402 and thereby determines whether the search pointer is disabled (Step 403). If the search pointer is enabled, the process goes to Step 413. If the search pointer is disabled, the process refers to the IT_TXT corresponding to the title in Step 404 and determines in Step 405 whether the TXT_SZ contains "0" (meaning that there is no password). If the TXT_SZ contains 0, the process goes to Step 413. If the determination in Step 405 is negative, meaning that the IT_TXT_SRP is disabled and that the TXT in the IT_TXT contains information, it can be determined that a password according to the present invention has already been set (the same as above). Consequently, the process substitutes the content (password) of TXT into a variable C (Step 406), displays the password input screen (FIG. 10(a)) (Step 407), and substitutes an acquired password into a variable D (Step 409) . If the acquired password is correct (C = D), the process returns a response indicating that the user is qualified to the other process which has invoked the "title-by-title user qualification process" (Step 413) and finishes processing.

If the determination in Step 410 is negative (the password is incorrect), the process displays the password re-entering screen (FIG. 10(b)) (Step 411) and goes to Step 408. In Step 408, if the Cancel button 100 shown in FIG. 10(a) or 10(b) is pressed, the process returns a response indicating that the user is not qualified to the other process which has invoked the "title-by-title user qualification process" (Step 412) and finishes processing. If the determination in Step 401 or 403 is negative or the determination in Step 405 is affirmative, meaning that a password according to the present invention has not been set yet, the process returns a response to the other process in Step 413, indicating that the user is qualified to proceed with further operations, and thereby finishes processing. In this way, if a password according to the present invention has already been set, the user is allowed to handle the title only if the user enters the correct password, but the user is not allowed to handle the title if the user enters an incorrect password. On the other hand, if no password according to the present invention has been set yet, the user is permitted to handle the title.

As described above, the present invention makes it possible to set title-by-title parental locks (access control to titles) in the DVD-VR format in which no title-by-title parental lockout has been used previously. Besides, by storing passwords in the IT_TXT fields of the TXTDT_MG table in the VR_MANGR.IFO file, the present invention makes it possible to store passwords by associating them with the titles without going against the standard of the DVD-VR format. Furthermore, since a large number of passwords can be set, allowing more detailed management (e.g. , 10, 000 passwords consisting of four decimal digits are available, which is equivalent to 10,000 parental levels), it is possible to manage parental locks in a more detailed manner than by a Video-format compliant method for setting title-by-title parental levels where only up to eight parental levels are available. Thus, the present invention makes it possible to set a different password for each of 99 titles (video programs), which is the maximum number of titles in a single disk.

Furthermore, in this example, if a password according to the present invention is set, pointer information which points to the IT_TXT address in the IT_TXT_SRP field is disabled. Consequently, since information in the IT_TXT cannot be accessed using the pointer information which points to the IT_TXT address in the IT_TXT_SRP field, malfunctions are avoided when a recording medium (e.g., DVD) prepared according to the present invention is loaded onto a device incompatible with the present invention. Also, since it can be determined whether the information in the IT_TXT is a password according to the present invention based on whether the IT_TXT_SRP is enabled or disabled, any information stored in the IT_TXT other than a password according to the present invention is prevented from being mistaken as a password and causing a malfunction.

In addition, by selecting processes which invoke the "title-by-title user qualification process" according to this example, it is possible to implement a function which allows/disallows only edit operations or only delete operations. For example, if only the processes which perform delete operations are set to invoke the "title-by-title user qualification process," and the other processes such as playback and edit processes are not; a password can be requested only when deleting the title, allowing only those who know the password to delete the title, and not when playing back or editing a title (any user can handle the title). This indicates that although the "title-by-title password setting/changing process" and "title-by-title user qualification process" according to this example are modularized, the present invention is not limited to this and these processes may be embedded in the playback process or edit process.

Although a DVD-equipped LCD has been cited as a concrete example of the "player, recorder/player, or electronic apparatus equipped therewith," the present invention is not limited to this. In addition to the DVD, available recording media include other optical disk media, magnetic disk media exemplified by an HDD, and semiconductor elements such as a flash memory. The "recorder, recorder/player, or electronic apparatus equipped therewith" according to the present invention is a player, recorder, recorder/player, or electronic apparatus equipped therewith which can handle these recording media.

With the recorder, recorder/player, or electronic apparatus equipped therewith set forth in claim 1, i.e., the recorder or recorder/player capable of title-by-title parental lockout, or electronic apparatus equipped therewith, where the recorder or recorder/player records content on a recording medium by a recording method compliant with the DVD Video Recording format, characterized in that when there is a request to set or change a password for a new title created as a result of video-recording or editing of content or for an existing title, a user is prompted for a password to be associated with the title and a table for the password is constructed in a VR_MANGR.IFO file in the DVD Video Recording format to allow the password to be associated with the title; since passwords are set on a title-by-title basis and the resulting information is stored in the VR_MANGR.IFO file, it is possible to set title-by-title parental locks (on playback or editing). Whereas only up to eight parental levels are available, a large number of passwords can be set, allowing more detailed management. This makes it possible to manage parental locks in a more detailed manner than by Video-format compliant methods for setting parental levels on a title-by-title basis. (For example, with the method which provides only eight parental levels, it is not possible to allocate a title to each user if 50 users share content containing 50 titles, but if a password can be set for each title, since it is possible to allow each user to view only one title, each user can keep a title created by himself/herself from being viewed by other users even when a recording medium is shared by multiple users.)

With the recorder, recorder/player, or electronic apparatus equipped therewith set forth in claim 2, i.e., the recorder or recorder/player capable of title-by-title parental lockout, or electronic apparatus equipped therewith according to claim 1, characterized in that the password is stored in an IT_TXT field of a TXTDT_MG table in the VR_MANGR.IFO file, making it possible to associate the password with the title; since passwords can be stored in the VR_MANGR.IFO file being associated with titles without going against the standard of the DVD-VR format, it is possible to set parental locks on a title-by-title basis in compliance with the standard of the DVD-VR format.

With the recorder, recorder/player, or electronic apparatus equipped therewith set forth in claim 3, i.e., the recorder or recorder/player capable of title-by-title parental lockout, or electronic apparatus equipped therewith according to claim 2, characterized in that pointer information which points to an address of the IT_TXT in an IT_TXT_SRP field of the TXTDT_MG table is disabled; since information in the IT_TXT cannot be accessed using pointer information about the IT_TXT address in the IT_TXT_SRP field of the TXTDT_MG table, malfunctions are avoided when a recording medium (e.g., DVD) prepared according to the present invention is loaded onto a device incompatible with the present invention. That is, when a given IT_TXT search pointer is disabled, the next IT_TXT search pointer is loaded, skipping the given IT_TXT search pointer (the information in the given IT_TXT field is not loaded), thereby avoiding a malfunction which would occur if the password stored in the given IT_TXT field were loaded.

With the player, recorder/player, or electronic apparatus equipped therewith set forth in claim 5, i.e., the player or recorder/player capable of title-by-title parental lockout, or electronic apparatus equipped therewith, where the player or recorder/player plays back content recorded on a recording medium by a recording method compliant with the DVD Video Recording format, characterized in that when a user makes a playback, edit, or other request for a title recorded on the recording medium on which passwords associated with respective titles in the content are stored in IT_TXT fields of a TXTDT_MG table in a VR_MANGR.IFO file, a playback, edit, or other operation of the title is permitted or refused by prompting the user to enter a password and comparing the entered password with the password associated with the requested title recorded on the recording medium; when a user makes a playback, edit, or other request for a title, a playback, edit, or other operation of the title is permitted or refused based on the validity of the password entered at a prompt, making it possible to set parental locks on a title-by-title basis.

## Claims

1. A recorder or recorder/player capable of title-by-title parental lockout, or electronic apparatus equipped therewith, where the recorder or recorder/player records content on a recording medium by a recording method compliant with the DVD Video Recording format, **characterized in that** when there is a request to set or change a password for a new title created as a result of video-recording or editing of content or for an existing title, a user is prompted for a password to be associated with the title and a table for the password is constructed in a VR_MANGR.IFO file in the DVD Video Recording format to allow the password to be associated with the title.

2. The recorder or recorder/player capable of title-by-title parental lockout, or electronic apparatus equipped therewith according to claim 1, **characterized in that** the password is stored in an IT_TXT field of a TXTDT_MG table in the VR_MANGR. IFO file, making it possible to associate the password with the title.

3. The recorder or recorder/player capable of title-by-title parental lockout, or electronic apparatus equipped therewith according to claim 2, **characterized in that** pointer information which points to an address of the IT_TXT field in an IT_TXT_SRP field of the TXTDT_MG table is disabled.

4. A recording medium capable of title-by-title parental lockout, where content has been recorded on the recording medium by a recording method compliant with the DVD Video Recording format, **characterized in that** passwords associated with respective titles in the content are stored in IT_TXT fields of a TXTDT_MG table in a VR_MANGR.IFO file.

5. A player or recorder/player capable of title-by-title parental lockout, or electronic apparatus equipped therewith, where the player or recorder/player plays back content recorded on a recording medium by a recording method compliant with the DVD Video Recording format, **characterized in that** when a user makes a playback, edit, or other request for a title recorded on the recording medium on which passwords associated with respective titles in the content are stored in IT_TXT fields of a TXTDT_MG table in a VR_MANGR.IFO file, a playback, edit, or other operation of the title is permitted or refused by prompting the user to enter a password and comparing the entered password with the password associated with the requested title recorded on the recording medium.

6. A title-by-title password setting method for setting passwords for respective titles of content recorded on a recording medium by a recording method compliant with the DVD Video Recording format, **characterized by** comprising a step of storing the passwords in IT_TXT fields of a TXTDT_MG table in a VR_MANGR.IFO file, thereby allowing passwords to be set for the respective titles.

7. A title-by-title access permission method provided for a playback, edit, or other request for a title of content recorded on a recording medium by a recording method compliant with the DVD Video Recording format, **characterized by** comprising the steps of: treating information in an IT_TXT field corresponding to the requested title and existing in a TXTDT_MG table in a VR_MANGR.IFO file as a password; prompting for the password if there is an access request to the title; and accepting or rejecting the access request based on the entered password.

8. A title-by-title password setting program running on a microcomputer incorporated in a recorder, recorder/player, or an electronic apparatus equipped therewith, where the recorder or recorder/player records content on a recording medium by a recording method compliant with the DVD Video Recording format, **characterized in that** when there is a request to set or change a password for a new title created as a result of recording or editing of content or for an existing title, the title-by-title password setting program makes the microcomputer execute the steps of: searching for a TXTDT_MG table and creating a TXTDT_MG table if no such table exists; searching an IT_TXT field of the TXTDT_MG table for an existing password associated with the title; and prompting for a password corresponding to the existing password if the existing password is found, prompting for a new password if the existing password is entered correctly, and storing the new password in the IT_TXT field of the TXTDT_MG table by associating the new password with the title; or prompting for a new password if no existing password is found and storing the new password in an IT_TXT field of the TXTDT_MG table by associating the new password with the title.

9. A title-by-title access permission program running on a microcomputer incorporated in a player, recorder/player, or electronic apparatus equipped therewith, where the player or recorder/player playback content recorded on a recording medium by a recording method compliant with the DVD Video Recording format, **characterized in that** when a user makes a playback, edit, or other request for a title recorded on the recording medium in compliance with the DVD Video Recording format, the access permission program makes the microcomputer execute the steps of: searching for a TXTDT_MG table; searching an IT_TXT field of the TXTDT_MG table for a password associated with the title; prompting the user to enter a password corresponding to the password associated with the title if the password associated with the title is found; comparing the entered password with the password associated with the title; and accepting or rejecting the playback, edit, or other request for the title based on a result of the comparison.
